# EUROPÄISCHE PATENTANMELDUNG

(11) **EP 0 723 139 A2**
(43) Veröffentlichungstag der Anmeldung: **24.07.1996**
(21) Anmeldenummer: 96100306.8
(22) Anmeldetag: 11.01.1996
(51) Int. Cl.: G01F 15/02

(54) **Messeinrichtung zur Volumenmessung**

(30) Priorität: 23.01.1995 DE 19501858
(71) Anmelder: GMT, Gas-, Mess- und Regeltechnik GmbH, 64521 Gross-Gerau (DE)
(72) Erfinder: Fröschle, Joachim, D-64347 Griesheim (DE); Mayer, Otto, D-63303 Dreieich (DE); Sand, Thomas, D-64521 Gross-Gerau (DE)
(74) Vertreter: Schieferdecker, Lutz, Dipl.-Ing.

(57) **Zusammenfassung**

Die Erfindung betrifft eine Meßeinrichtung mit einem Meßwerk (2) zur Volumenmessung eines strömenden Mediums, insbesondere Balgengaszähler (1'), wobei das Meßwerk (2) einen Meßwertgeber (8) umfaßt und wobei ferner eine Temperaturkompensationseinrichtung (21, 61) vorgesehen ist, die mindestens ein temperaturunabhängiges Stellelement (22, 71) umfaßt.

Der Kern der Erfindung besteht darin, daß die Temperaturkompensationseinrichtung (21, 61) als formschlüssiges Übertragungsteil in das Getriebe (20, 60) zwischen dem Meßwertgeber (8) und dem davon angetriebenen Zählwerk (4) integriert ist.

## Beschreibung

Die Erfindung betrifft eine Meßeinrichtung zur Volumenmessung, insbesondere einen Balgengaszähler, mit einem Meßwerk, dessen Meßwertgeber über einen formschlüssigen Antrieb, der ein Getriebe enthält, ein Zählwerk antreibt, wobei eine auf das Getriebe einwirkende Temperaturkompensationseinrichtung vorgesehen ist, der ein auf die Temperatur des gemessenen Mediums ansprechendes Stellelement zugeordnet ist.

Aus der DE 39 33 787 A1 ist ein Balgengaszähler mit einer Temperaturkompensation bekannt. Die Balgenbewegungen werden auf einen Meßwertgeber übertragen, wobei in den Antrieb vom Meßwertgeber zum Zählwerk eine stufenlos verstellbare Kupplung mit einem Kegelscheibenpaar eingeschaltet ist, deren Kegelscheiben jeweils durch ein Bimetall-Element verstellbar sind und dadurch den wirksamen Radius verändern, mit dem das Kegelscheibenpaar mit einem reibschlüssig anliegenden Übertragungsrad zusammenwirkt. Im Interesse der Temperaturkompensation ist also statt einer formschlüssigen eine kraftschlüssige Übertragung vorgesehen, um dem temperaturabhängigen Stellelement eine Einwirkungsmöglichkeit zu bieten. Im Bereich des Reibschlusses treten jedoch Probleme durch Verschmutzung und Abrieb auf, was einerseits vergleichsweise große Antriebskräfte erforderlich macht und zum anderen zu Störungen und ungenauen Meßergebnissen führen kann.

Aus der DE 24 31 752 B2 ist bereits eine Meßeinrichtung der eingangs beschriebenen Bauart mit einem formschlüssigen Antrieb zwischen dem Meßwertgeber und dem Zählwerk bekannt. Hier erfolgt die Temperaturkompensation dadurch, daß der formschlüssige Antrieb ein Summiergetriebe mit zwei Eingängen aufweist, wobei einem Eingang das unkorrigierte Bewegungssignal vom Meßwertgeber und dem anderen Eingang ein gleichfalls vom Meßwertgeber abgeleitetes jedoch mittels des temperaturabhängigen Stellelements korrigiertes Bewegungssignal zugeführt wird. Hierfür ist eine aufwendige Stellvorrichtung vorgesehen, wobei wiederum mit einer Reibscheibe und einem Reibrad gearbeitet wird, um das temperaturabhängig korrigierte Eingangssignal zu erhalten. Daher ist auch hier trotz des hohen Aufwands mit den reibschlußbedingten Störungen und Meßungenauigkeiten zu rechnen.

Dementsprechend liegt der Erfindung die Aufgabe zugrunde, eine mit einer Temperaturkompensation versehene Volumenmeßeinrichtung der eingangs beschriebenen Bauart zu schaffen, die bei einfachem Aufbau und leichter Montage sicher und zuverlässig mit genauen Meßergebnissen arbeitet.

Diese Aufgabe wird erfindungsgemäß dadurch gelöst, daß die Temperaturkompensationseinrichtung als formschlüssiges Übertragungsteil in das Getriebe integriert ist.

Somit wird erfindungsgemäß das vom Meßwertgeber gelieferte Bewegungssignal einschließlich des temperaturgemäßen Korrekturanteils formschlüssig auf das Zählwerk übertragen, so daß die dem Kraftschluß anhaftenden Nachteile ausgeräumt sind. Verbunden damit ist eine hohe Meßgenauigkeit - auch was die Berücksichtigung der Temperatur angeht - und eine sehr exakte, nahezu fehlerfreie Anzeige am Zählwerk.

Zweckmäßige Ausgestaltungen der Erfindung ergeben sich aus den Unteransprüchen. Danach kann bei einer zweckmäßigen Ausführungsform das Stellelement selbst als formschlüssiges Übertragungsteil in das Getriebe integriert sein, so insbesondere als Kurbel eines Schubkurbeltriebs, wobei das Stellelement eine temperaturabhängige Veränderung der wirksamen Radiallänge der Kurbel bewirkt.

Zweckmäßige Weiterbildungen dieser Ausführung mit einem Schubkurbeltrieb, welche die Umwandlung der Linearbewegung des Abtriebglieds in eine für das Zählwerk geeignete Rotationsbewegung betreffen, sind ebenfalls in den Unteransprüchen enthalten.

Bei einer anderen vorteilhaften Version ist das Stellelement selbst zwar nicht Teil des formschlüssigen Antriebs, wirkt jedoch zur Temperaturkorrektur auf ein Getriebeteil ein, das Teil des formschlüssigen Antriebs bzw. seines Getriebes ist. Somit wird auch in diesem Fall eine Temperaturkorrektur ohne Unterbrechung des Formschlusses durch einen Kraftschluß erreicht.

Die Erfindung wird nachstehend anhand von Ausführungsbeispielen, die in der Zeichnung dargestellt sind, näher beschrieben. Dabei zeigen:
- Fig. 1:: in schematischer Darstellung eine Seitenansicht einer ersten Einrichtung zur Temperaturkompensation;
- Fig. 2:: einen Schnitt längs der Linie II-II in Fig. 1;
- Fig. 3:: eine schematische Ansicht der Einrichtung gemäß Fig. 1 von hinten in Form einer um eine horizontale Achse um 180° geklappten Darstellung;
- Fig. 4:: eine schematische Ansicht einer anderen Einrichtung zur Temperaturkompensation;
- Fig. 5:: einen Schnitt längs der Linie V-V in Fig. 4:
- Fig. 6;: eine schematische Darstellung eines Balgengaszählers mit einer integrierten Einrichtung zur Temperaturkompensation gemäß Fig. 1 und mit einem Zählwerk und
- Fig. 7:: einen Schnitt wie in Fig. 2 von einem weiteren, abgewandelten Getriebe ähnlich dem in den Fig. 1 bis 3 dargestellten Getriebe.

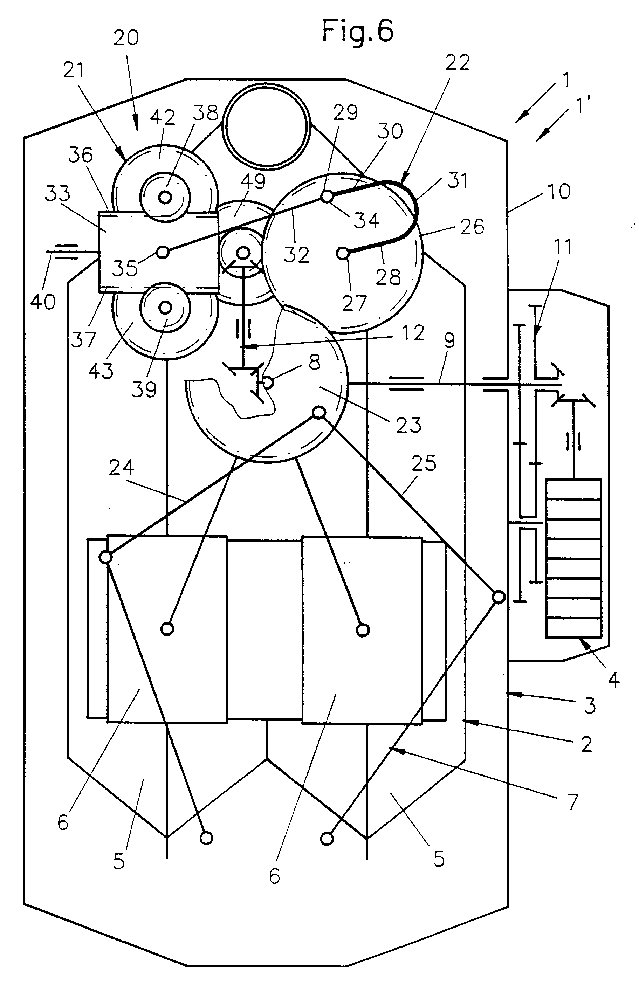

Eine Meßeinrichtung 1 und insbesondere ein Balgengaszähler 1' gemäß Fig. 6 umfaßt ein Meßwerk 2 im Inneren eines Gehäuses 3 und ein Zählwerk 4. Zu dem Meßwerk 2 gehören Meßkammern 5 und Schieber 6 sowie eine Gestängeanordnung 7, die einerseits die Schieber 6 steuert und andererseits mit einem Meßwertgeber 8 verbunden ist. Ferner führt eine Zählwerkswelle 9 durch eine Wand 10 des Gehäuses 3 von dessen Inneren nach außen und überträgt das Ergebnis des Meßwerkes 2 unter Zwischenschaltung eines Getriebes 11 auf das Zählwerk 4.

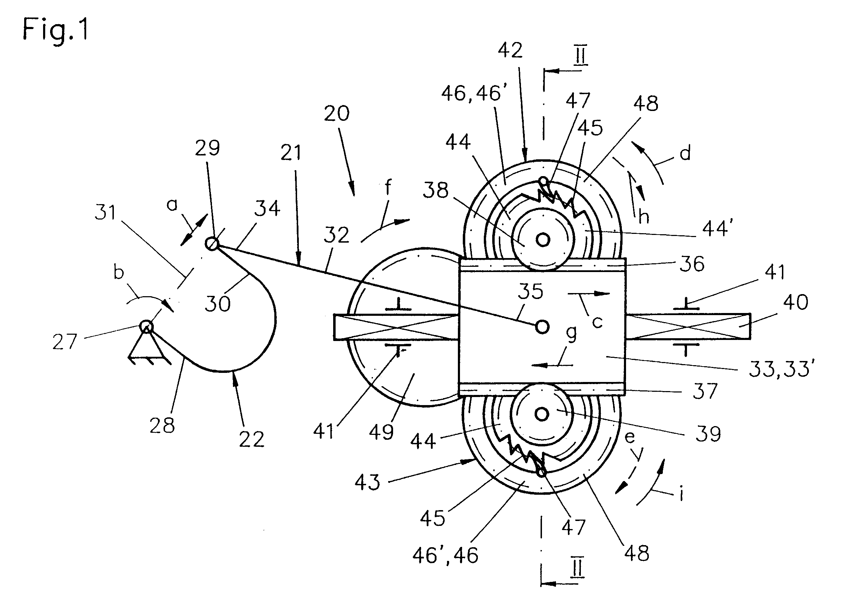

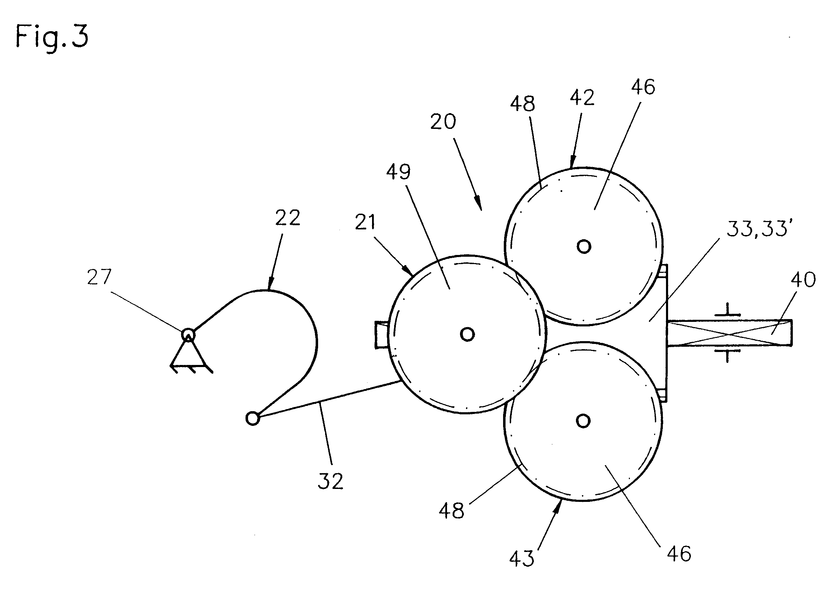

Im Zusammenhang mit der Kompensation der sich ändernden Temperatur ist ein Getriebe 20 vorgesehen, das mit der Zählwerkswelle 9 und dem Getriebe 11 den Antrieb für das Zählwerk 4 bildet. Das Getriebe 20 umfaßt gemäß den Figuren 1 bis 3 eine Temperaturkompensationseinrichtung 21 mit formschlüssig ineinandergreifenden Getriebeteilen. Die Temperaturkompensationseinrichtung 21 wandelt die Bewegungen des Meßwertgebers 8 unter Zwischenschaltung eines temperaturabhängigen Stellelementes 22 in Rotationsbewegungen in einer einzigen Drehrichtung um, so daß sich auch die Zählwerkswelle 9 im Ergebnis nur in einer Richtung dreht.

Gemäß dem in Fig. 6 dargestellten Ausführungsbeispiel ist der Meßwertgeber 8 eine Welle, die ein Zahnrad 23 trägt, an dem ferner zwei Schwingen 24 und 25 der Gestängeanordnung 7 angelenkt sind. Das Zahnrad 23 kämmt mit einem Zahnrad 26. Das Stellelement 22 ist vorzugsweise ein Bimetallelement und kann gemäß Ausführungsbeispiel U-förmig sein. Das Stellelement 22 ist ferner mit einem Ende 27 seines einen Schenkels 28 mit dem Zahnrad 26 verbunden, so daß es von diesem mitgedreht wird. Das andere Ende 29 des zweiten Schenkels 30 des U-förmigen Stellelementes 22 befindet sich in radialem Abstand von dem Ende 27, wobei die beiden Enden 27 und 29 zwei Endpunkte einer Kurbel 31 definieren, die in Fig. 12 mit einer strichpunktierten Linie symbolisch dargestellt ist.

Da es sich bei dem zugleich als Kurbel 31 dienenden Stellelement 22 um ein Bimetallelement handelt, ändert sich der Kurbelradius bzw. der radiale Abstand zwischen den beiden Enden 27 und 29 und somit die wirksame Kurbellänge bei einer Temperaturänderung, wie dies auch anhand des Pfeiles a in Fig. 1 angedeutet ist. Dies hat zur Folge, daß die Bewegungen des Meßwertgebers 8 zunächst umgewandelt werden in Bewegungen einer Kurbel 31 mit sich in Abhängigkeit von der Temperatur änderndem Kurbelradius. Dabei ist es ferner gleichgültig, ob im Falle eines Balgengaszählers die dort befindliche, in Fig. 6 nicht dargestellte Membran bei jedem Meßvorgang voll ausgefahren wird oder nur teilweise ausgefahren wird und ob sich der Meßwertgeber kontinuierlich in einer einzigen Richtung bewegt oder hin- und hergehende Bewegungen ausführt. Diese Bewegungen werden durch die Zahnräder 23 und 26 synchron auf das als Kurbel 31 dienende Stellelement 22 übertragen und sodann von diesem aufgrund der jeweiligen Temperatur kompensiert und an die anderen Teile der Temperaturkompensationseinrichtung 21 weitergegeben, die die Bewegungen des zum Ausgleich dienenden Stellelementes 22 in eine Drehbewegung mit einer einzigen Drehrichtung umwandeln.

Die Temperaturkompensationseinrichtung 21 umfaßt eine Pleuelstange 32 und ein Abtriebsglied 33, das im Meßwerk 2 für hinund hergehende Bewegungen gelagert ist. Die Teile 31 bis 33 bilden einen Schubkurbeltrieb. Die Pleuelstange 32 ist mit ihrem einen Ende 34 mit dem Ende 29 des U-förmigen Stellelementes 22 gelenkig verbunden und mit ihrem anderen Ende 35 an dem Abtriebsglied 33 angelenkt. Das Abtriebsglied 33 führt somit mehr oder weniger große Hubbewegungen in Abhängigkeit von den Dreh- oder Schwenkbewegungen des kurbelförmigen Stellelementes 22 sowie in Abhängigkeit von dem radialen Abstand von dessen Enden 27 und 29 aus.

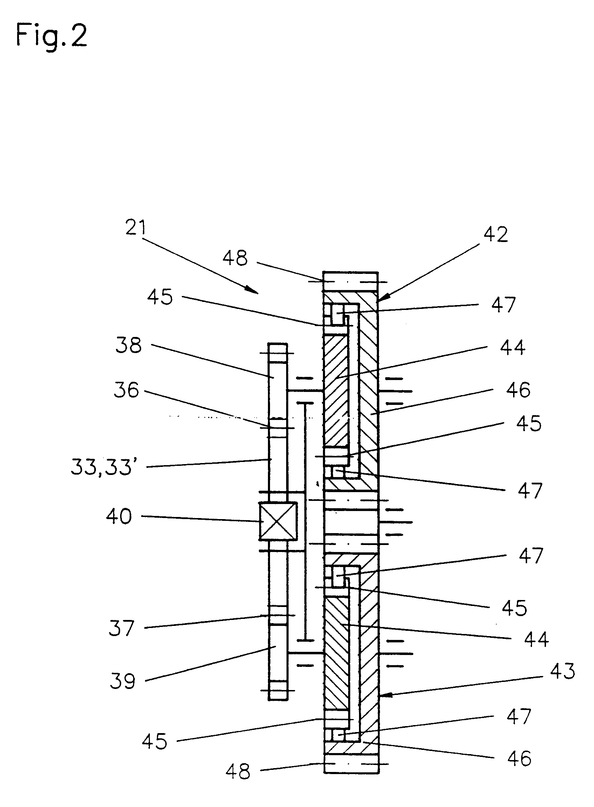

Das Abtriebsglied 33 ist eine Zahnstangenanordnung 33' und weist mindestens eine Zahnstange 36 bzw. gemäß Ausführungsbeispiel zwei Zahnstangen 36 und 37 auf. Die Zähne dieser Zahnstangen 36 und 37 kämmen jeweils mit einem Zahnrad 38, 39, wie dies insbesondere auch in den Figuren 1 und 2 dargestellt ist. Die axial verschiebbare Lagerung des Abtriebsglieds 33 kann gemaß dem in den Figuren dargestellten Ausführungsbeispiel mit Hilfe einer Stange 40 erfolgen, die zwischen Lagerteilen 41 hin und her verschiebbar ist. Die Teile 40 und 41 bilden eine Längsführung.

Verbunden mit jedem der Zahnräder 38 bzw. 39 ist je ein Freilauf 42, 43. Jeder Freilauf 42, 43 weist gemäß Ausführungsbeispiel ein drehfest mit dem Zahnrad 38 bzw. 39 verbundenes, angetriebenes Eingangszahnrad 44 in Gestalt eines Innenrades 44' mit Zähnen 45 und ein abtriebsseitig angeordnetes Ausgangszahnrad 46 in Gestalt eines Außenrades 46' mit mindestens einem Rastelement 47 auf, das mit den Zähnen 45 des jeweiligen Eingangszahnrades 44 zusammenwirkt. Vorzugsweise ist die Zähnezahl der Eingangszahnräder 44 groß und jedes Ausgangszahnrad 46 ist ferner vorzugsweise mit zwei oder mehr Rastelementen 47 bestückt, die ferner vorzugsweise relativ zueinander und gegenüber den Zähnen 45 der Eingangszahnräder 44 für ein optimales Teilungsverhältnis leicht versetzt sind.

Die beiden Ausgangszahnräder 46 der beiden Freiläufe 42, 43 umgreifen die beiden Eingangszahnräder 44 schalenförmig. Die Rastelemente 47 greifen somit von den Ausgangszahnrädern 46 radial einwärts zwischen die radial nach außen gerichteten Zähne 45 der Eingangszahnräder 44.

Die beiden Ausgangszahnräder 46 der Freiläufe 42, 43 sind Außenräder 46' und tragen hierzu an ihrem Außenumfang je eine Verzahnung mit Zähnen 48 und kämmen mit einem weiteren Abtriebsrad 49, wie dies in den Figuren 1, 3 und 6 dargestellt ist. Die Teile 33 bis 49 bilden einen Bewegungswandler.

Die Funktion und Wirkungsweise des Getriebes 20 geht am besten aus der Darstellung in Fig. 1 und den dort eingetragenen Pfeilen hervor.

Wenn sich das als Kurbel dienende Stellelement 22 gemäß Fig. 1 im Uhrzeigersinn entsprechend dem Pfeil b bewegt, so bewegt die Pleuelstange 32 das als Zahnstangenanordnung 33' ausgebildete Abtriebsglied 33 entsprechend dem Pfeil c nach rechts. Die beiden mit der Zahnstangenanordnung 33' kämmenden Zahnräder 38 und 39 drehen sich gleichzeitig in Richtung der Pfeile d bzw. e, wobei beide Zahnräder 38 und 39 die jeweiligen Eingangszahnräder 44 der beiden Freiläufe 42, 43 drehfest mitnehmen. Das bzw. die Rastelemente 47 am Freilauf 42 sind derart angeordnet, daß auch das Ausgangszahnrad 46 formschlüssig in Richtung des Pfeiles d mitgenommen wird. Das bzw. die Rastelemente 47 am Ausgangszahnrad 46 des anderen Freilaufes 43 sind ferner derart angeordnet, daß dieses Ausgangszahnrad 46 bei Drehung seines Eingangszahnrades 44 in Richtung des Pfeiles e nicht mitgenommen wird. Die gestrichelte Darstellung des Pfeiles e gibt diesen Sachverhalt wieder. Bei einer Bewegung der Zahnstangenanordnung 33' in Richtung des Pfeiles c dreht sich somit nur das abtriebsseitig angeordnete Ausgangszahnrad 46 des Freilaufes 42 mit den an seinem Umfang befindlichen Zähnen 48 und dreht gleichzeitig das Abtriebsrad 49 im Uhrzeigersinn entsprechend dem Pfeil f.

Sobald sich bei Drehung des als Kurbel dienenden Stellelementes 22 die Zahnstangenanordnung 33' nach Erreichen einer rechts in Fig. 1 befindlichen Endlage in Richtung des Pfeiles g nach links bewegt, drehen sich die beiden Zahnräder 38 und 39 entgegengesetzt zur vorherigen Drehrichtung mit der Folge, daß jetzt das abtriebsseitige Ausgangszahnrad 46 des Freilaufes 42 aufgrund der Anordnung der Rastelemente 47 nicht mehr mitgedreht wird, wie dies anhand des Pfeiles h angedeutet ist, während sich das Ausgangszahnrad 46 des anderen Freilaufes 43 in Richtung des Pfeiles i entgegen dem Uhrzeigersinn mitdreht. Die Zähne 48 am Ausgangszahnrad 46 des Freilaufes 43 kämmen ebenfalls mit den Zähnen des Abtriebsrades 49 mit der Folge, daß nunmehr dieses Ausgangszahnrad 46 das Abtriebsrad 49 in Richtung des Pfeiles f weiterdreht, bis aufgrund der Bewegung der Pleuelstange 32 die links in Fig. 1 befindliche Endlage der Zahnstangenanordnung 33' erreicht ist.

Die Bewegungen der Zahnstangenanordnung 33' in Richtung der sie lagernden Stange 40 können klein oder groß sein. In beiden Fällen wird die Bewegung der Zahnstangenanordnung 33' durch die beiden entgegengesetzt wirkenden Freiläufe 42 und 43 in Drehbewegungen mit einer einzigen Drehrichtung umgewandelt. Hierzu übertragen die beiden Feiläufe 42 und 43 jeweils abtriebsseitig ihre Bewegungen auf ein gemeinsames, weiterführendes Abtriebsrad 49, das sich nur in einer einzigen Drehrichtung bewegt.

Für die Zwecke einer Meßeinrichtung 1 und insbesondere eines Balgengaszählers 1' ist es ohne Belang, daß sich das Abtriebsrad 49 wegen der Umkehrpunkte bei der Bewegung der Zahnstange 40 schrittweise bewegt.

Die Drehbewegungen des Abtriebsrades 49 werden schließlich über ein Getriebe 12 und von dort auf die Zählwerkswelle 9 und schließlich auf das Zählwerk 4 übertragen, wie dies in Fig. 6 schematisch dargestellt ist.

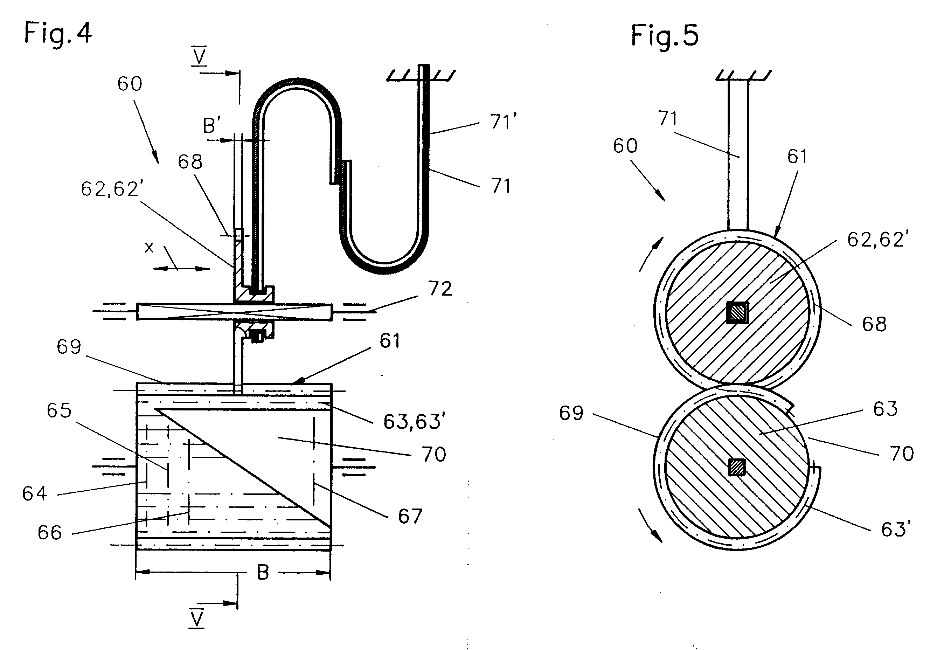

Die beiden Figuren 4 und 5 zeigen ein abgewandeltes Getriebe 60 zur Temperaturkompensation einer zur Volumenmessung dienenden Meßeinrichtung 1 gemäß Fig. 6, wobei ebenfalls eine Temperaturkompensationseinrichtung 61 vorgesehen ist, die formschlüssig ineinandergreifende Getriebeteile 62, 63 aufweist. Bei den Getriebeteilen 62, 63 handelt es sich um zwei miteinander kämmende Zahnräder 62' bzw. 63', wobei mindestens eines der beiden Zahnräder 63' mit einer variablen Zähnezahl versehen ist.

Gemäß Ausführungsbeispiel weist das antreibende Zahnrad 63' mehrere Zahnreihen 64 bis 67 mit mindestens teilweise unterschiedlicher Zähnezahl bei konstantem Zahnmodul und bei konstantem Zahnabstand auf, wobei Zahnmodul und Zahnabstand gleich sind wie der Zahnmodul und der Zahnabstand des eine einzige Zahnreihe 68 aufweisenden, abtriebsseitig angeordneten Zahnrades 62'. Die Breite B des antriebsseitig angeordneten Zahnrades 63' ist daher in axialer Richtung wesentlich größer als die Breite B' des abtriebsseitig angeordneten Zahnrades 62'.

Zur Erzielung mehrerer Zahnreihen 64 bis 67 mit unterschiedlicher Zähnezahl weist das Zahnrad 63' an seinem Umfang eine viele Zähne erfassende Zahnlücke 70 auf. In der Abwicklung bildet diese Zahnlücke 70 ein Dreieck, so daß Zahnreihen 64 bis 67 mit kontinuierlich abnehmender Zähnezahl nebeneinander angeordnet sind.

Gemäß dem in den Figuren 4 und 5 dargestellten Ausführungsbeispiel ist das antreibende Zahnrad 63' ortsfest gelagert, während sich das abtriebsseitig angeordnete Zahnrad 62' an einem Stellelement 71 befindet, der das Zahnrad 62' in Richtung seiner Achse 72 entsprechend dem Pfeil x bewegen kann. Das Stellelement 71 ist ein Ausgleichsbewegungen bewirkendes doppel-U-förmiges Bimetallelement 71', wie dies in Fig. 4 dargestellt ist. Das Stellelement 71 bewirkt, daß das Zahnrad 62' quer zum Zahnrad 63' bewegbar ist und bei unterschiedlichen Temperaturen mit jeweils verschiedenen Zahnreihen 64 bis 67 des Zahnrades 63' kämmt. Aufgrund der unterschiedlichen Zähnezahl in den verschiedenen Zahnreihen 64 bis 67 überträgt das antreibende Zahnrad 63' jeweils Meßwerte in temperaturkompensierter Weise auf das andere Zahnrad 62'.

Das Stellelement 71 ist ebenso wie das als Kurbel 31 dienende Stellelement 22 des zuerst beschriebenen Ausführungsbeispieles ein Ausgleichs- bzw. Kompensationselement für sich ändernde Temperaturen. Hierzu befindet es sich im Falle eines Balgengaszählers im Inneren des Gasstromes, auch wenn dies ebenso wie weitere, die Drehbewegungen der Achse 72 oder Welle 72 übertragende Elemente in den Figuren 4 und 5 nicht dargestellt ist.

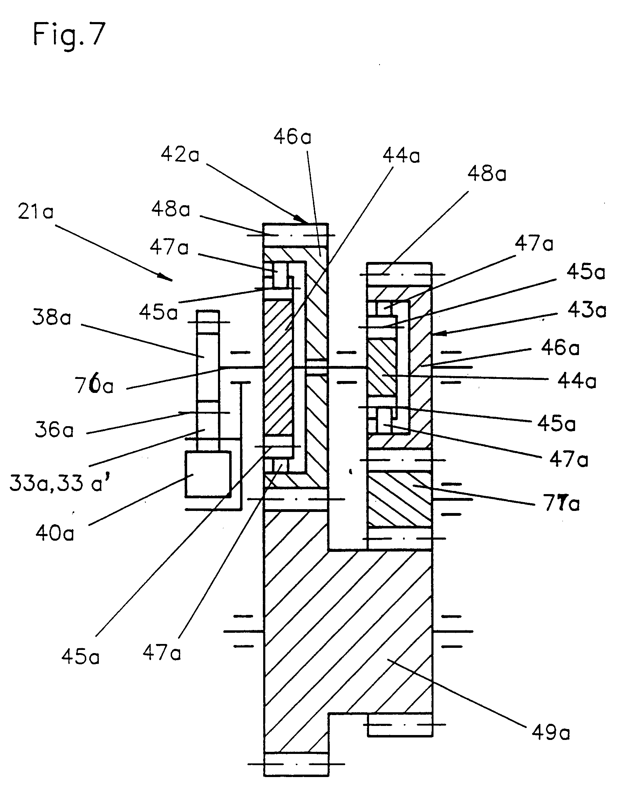

Eine weitere, formschlüssig ineinandergreifende Getriebeteile aufweisende Temperaturkompensationseinrichtung 21a, die ähnlich der in den Figuren 1 bis 3 dargestellten Temperaturkompensationseinrichtung 21 arbeitet, geht aus Fig. 7 hervor. Identisch übereinstimmende oder ähnliche Teile weisen daher dieselben Bezugszahlen und zusätzlich den Buchstabenindex a auf.

Die Temperaturkompensationseinrichtung 21a umfaßt ebenfalls ein Abtriebsglied 33a mit einer Zahnstange 33a', die jedoch nur mit einer einzigen Zahnstange 36a versehen ist. Die verschiebbare Lagerung der Zahnstange 33a' kann ebenfalls wie bei dem zuerst beschriebenen Ausführungsbeispiel mit Hilfe einer Stange 40a oder dergleichen erfolgen.

Ein Zahnrad 38a kämmt mit der Zahnstange 36a der Zahnstange 33a' und ist über eine Welle 76a mit zwei, jeweils gegensinnig wirksamen Freiläufen 42a und 43a verbunden. Gemäß Ausführungsbeispiel sind jeweils an ihrem Umfang Zähne 45a tragende Eingangszahnräder 44a drehfest auf der Welle 76a angeordnet und wirken mit Ausgangszahnrädern 46a zusammen. Die Ausgangszahnräder 46a weisen den Zähnen 45a der Eingangszahnräder 44a zugeordnete Rastelemente 47a auf und sind ferner an ihrem Außenumfang mit Zähnen 48a versehen. Bei Drehung des Zahnrades 38a in der einen Drehrichtung dreht sich das Ausgangszahnrad 46a des einen Freilaufes 42a mit, während sich bei Drehung des Zahnrades 38a in der anderen Drehrichtung das Ausgangszahnrad 46a des anderen Freilaufes 43a mitdreht.

Ebenso wie im Falle der zuerst beschriebenen Temperaturkompensationseinrichtung 21 treiben die als Zahnräder ausgebildeten Ausgangszahnräder 46a der beiden Freiläufe 42a und 43a ein weiteres Abtriebsrad 49a in einer einzigen Drehrichtung an. Dabei kämmt das eine Ausgangszahnrad 46a des einen Freilaufes 42a unmittelbar mit dem Abtriebsrad 49a, während zwischen dem Ausgangszahnrad 46a des anderen Freilaufes 43a und dem Abtriebsrad 49a zusätzlich noch ein die Drehrichtung kompensierendes Umkehr-Zwischenrad 77a angeordnet ist. Die Teile 33a bis 49a bilden zusammen mit den Teilen 76a und 77a einen Bewegungswandler.

Bei allen Ausführungsbeispielen handelt es sich somit um Getriebe mit formschlüssig ineinandergreifenden Getriebeteilen, die aufgrund des die Temperatur kompensierenden Ausgleichs- bzw. Stellelementes 22, 71 zeitweise und/oder teilweise zusammenwirken oder voneinander getrennt sind.

Es versteht sich ferner, daß die Erfindung nicht auf die in den Figuren konkret dargestellten Ausführungsbeispiele beschränkt ist, vielmehr sind noch mannigfache Abwandlungen möglich, ohne den Erfindungsgedanken zu verlassen. So ist beispielsweise auch eine andere Gestaltung der Freiläufe 42, 43 bzw. 42a, 43a denkbar. Die Rastelemente 47a können sich auch jeweils am Umfang der Eingangszahnräder 44, 44a befinden und die Ausgangszahnräder 46, 46a können zusätzlich eine Innenverzahnung aufweisen, in welche die Rastelemente 47, 47a eingreifen. Dies hat zur Folge, daß wegen der größeren Zähnezahl dann auch eine noch feinere Erfassung des kompensierten Meßergebnisses möglich ist.

## Patentansprüche

1. Meßeinrichtung zur Volumenmessung, insbesondere Balgengaszähler (1'), mit einem Meßwerk (2), dessen Meßwertgeber (8) über einen formschlüssigen Antrieb (9, 11, 20), der ein Getriebe (20, 60) enthält, ein Zählwerk (4) antreibt, wobei eine auf das Getriebe (20, 60) einwirkende Temperaturkompensationseinrichtung (21, 61) vorgesehen ist, der ein auf die Temperatur des gemessenen Mediums ansprechendes Stellelement (22, 71) zugeordnet ist, **dadurch gekennzeichnet,** daß die Temperaturkompensationseinrichtung (21, 61) als formschlüssiges Übertragungsteil in das Getriebe (20, 60) integriert ist.

2. Meßeinrichtung nach Anspruch 1, **dadurch gekennzeichnet,** daß als temperaturabhängiges Stellelement (22, 71) wenigstens ein Bimetallelement vorgesehen ist.

3. Meßeinrichtung nach Anspruch 1 oder 2, **dadurch gekennzeichnet,** daß das temperaturabhängige Stellelement (22) selbst als formschlüssiges Übertragungsteil in das Getriebe (20) integriert ist.

4. Meßeinrichtung nach Anspruch 3, **dadurch gekennzeichnet,** daß das Getriebe (20) einen Schubkurbeltrieb (31 bis 33) mit einer vom temperaturabhängigen Stellelement (22) gebildeten Kurbel (31), deren wirksame Radiallänge sich temperaturabhängig ändert, eine Pleuelstange (32) und ein linear hin- und herbewegtes Abtriebsglied (33) aufweist.

5. Meßeinrichtung nach Anspruch 4, **dadurch gekennzeichnet,** daß das temperaturabhängige Stellelement (22) U-förmig, mit seinem einen Ende drehbar gelagert und vom Meßwertgeber (8) dreh- oder schwenkangetrieben ist, wobei das andere Ende des Stellelements (22) gelenkig mit der Pleuelstange (32) verbunden ist, die am hin- und herbewegten Abtriebsglied (33) angreift, dem eine Längsführung (40, 41) zugeordnet ist.

6. Meßeinrichtung nach Anspruch 4 oder 5, **dadurch gekennzeichnet,** daß das Getriebe (20) auch einen Bewegungswandler (33 bis 49; 33a bis 49a, 76a, 77a) aufweist, der formschlüssig die Linearbewegung des hin- und herbewegten Abtriebsglieds (33) in eine Rotationsbewegung in gleichbleibender Richtung umwandelt.

7. Meßeinrichtung nach Anspuch 6, **dadurch gekennzeichnet,** daß das Abtriebsglied (33) mit zwei Zahnstangen (36, 37) versehen ist und der Bewegungswandler (33 bis 49) zwei in entgegengesetzten Richtungen wirksame Freiläufe (42, 43) mit jeweils einem Eingangszahnrad (44), das von der einen bzw. der anderen Zahnstange (36 bzw. 37) angetrieben ist, und einem Ausgangszahnrad (46) aufweist, das jeweils mit einem in gleichbleibender Richtung drehenden gemeinsamen Abtriebszahnrad (49) kämmt.

8. Meßeinrichtung nach Anspruch 6, **dadurch gekennzeichnet,** daß das Abtriebsglied (33a) mit einer Zahnstange (36a) versehen ist, die die Eingangszahnräder (44a) zweier in entgegengesetzten Richtungen wirksamer Freiläufe (42a, 43a) antreibt, deren Ausgangszahnräder (46a) im einen Fall direkt und im anderen Fall über ein Umkehr-Zwischenrad (77a) mit einem in gleichbleibender Richtung drehenden gemeinsamen Abtriebszahnrad (49a) kämmen.

9. Meßeinrichtung nach Ansprpuch 7 oder 8, **dadurch gekennzeichnet,** daß die Eingangszahnräder (44, 44a) eines jeden Freilaufs (42, 43; 42a; 43a) eine große Zahl feiner Zähne aufweisen, mit denen das Rastelement (47, 47a) am Ausgangszahnrad (46, 46a) drehrichtungsabhängig in Eingriff tritt.

10. Meßeinrichtung nach Anspruch 1 oder 2, **dadurch gekennzeichnet,** daß die Temperaturkompensationseinrichtung (61) zwei kämmende Zahnräder (62', 63') umfaßt, von denen wenigstens eines (63') Zahnreihen (64 bis 67) mit unterschiedlicher Zähnezahl aufweist, und daß das temperaturabhängige Stellelement (71) durch Verstellung eines (62') der Zahnräder (62', 63') die jeweils wirksame Zahnreihe (64 bis 67) steuert.

11. Meßeinrichtung nach Anspruch 10, **dadurch gekennzeichnet,** daß die Zahnreihen (64 bis 67) an einem entsprechend breiten Zahnrad (63') axial nebeneinander angeordnet sind und daß die unterschiedliche Zähnezahl durch eine Zahnlücke (70) gebildet ist, deren Umfangsbreite in Axialrichtung ansteigt.

12. Meßeinrichtung nach Anspruch 11, **dadurch gekennzeichnet,** daß die Zahnlücke (70) in der Abwicklung des Zahnrads (63') ein Dreieck bildet.
